# EUROPEAN PATENT SPECIFICATION

(11) **EP 2 918 953 B1**
(45) Date of publication and mention of the grant of the patent: **01.11.2017**
(21) Application number: 13850119.2
(22) Date of filing: 12.09.2013
(51) Int. Cl.: F25B 47/02, F24F 11/02

(54) **AIR CONDITIONER**
KLIMAANLAGE
CLIMATISEUR

(30) Priority: 31.10.2012 JP 2012239846
(43) Date of publication of application: 16.09.2015
(73) Proprietor: Daikin Industries, Ltd., Osaka-shi, Osaka 530-8323 (JP)
(72) Inventor: TOYODA, Daisuke, Osaka-shi, Osaka 530-8323 (JP)
(74) Representative: Hoffmann Eitle
(86) International application number: PCT/JP2013/005420
(87) International publication number: WO 2014/068833

(56) References cited:
- WO-A1-2007/013382
- JP-A- 2006 046 692
- JP-A- 2012 207 803
- JP-U- S55 139 359

## Description

### TECHNICAL FIELD

The present invention relates to an air conditioner which performs a heating operation and a defrosting operation and, in particular, to a technique for the reduction of a refrigerant noise.

### BACKGROUND ART

Air conditioners known in the arts create refrigeration cycles to warm up rooms. This kind of air conditioner is disclosed in Patent Document 1, for example. This air conditioner has a refrigerant circuit along which the following devices are connected: a compressor, a four-way switching valve, an indoor heat exchanger, an expansion valve, and an outdoor heat exchanger. When performing a heating operation, the air conditioner circulates a refrigerant to create a refrigeration cycle. In the indoor heat exchanger, then, the refrigerant dissipates heat into air and condenses, so that the air is heated. The heated air is supplied into a room.

When this air conditioner continues the heating operation, frost is formed on the outdoor heat exchanger, which causes a reduction in heat exchanging capability of the outdoor heat exchanger. Hence, the air conditioner carries out a defrosting operation at intervals of hearting operations each carried out for a predetermined time period. During the defrosting operation, the refrigerant circulates in the opposite direction from the heating operation to create a refrigeration cycle. Consequently, in the outdoor heat exchanger, the refrigerant dissipates heat into the frost and condenses so that the frost is heated to melt away. Further, in Patent Document 2, there is disclosed a control method of an air conditioner. After starting a cooling cycle operation while an outdoor fan is stopped for defrosting, the temperature of a refrigerant outlet side pipe of an outdoor heat exchanger is sensed with a pipe temperature sensor. When the pipe temperature exceeds a predetermined reference temperature, an expansion valve is closed and a refrigerant at a high temperature and high pressure discharge from a compressor is stored in the outdoor heat exchanger. Document 2 discloses an air conditioner according to the preamble of claim 1. Further, Patent Document 3, there is described a heat pump type air conditioner. Almost the defrost heat of an air heat changer is obtained from a water heat exchanger. Since a refrigerant is never carried to an indoor heat exchanger or it is a small amount even if carried, an inconvenient situation such that this causes generation of noise in a living room or descending of cold air from the cooled indoor heat exchanger is restrained.

### CITATION LIST

### PATENT DOCUMENT

PATENT DOCUMENT 1: Japanese Unexamined Patent Publication No. 2000-314539
PATENT DOCUMENT 2: JP 2012 207803 A
PATENT DOCUMENT 3: JP 2006 046692 A

### SUMMARY OF THE INVENTION

### TECHNICAL PROBLEM

In the air conditioner of the known art according to Patent Document 1:, a large amount of liquid refrigerant would flow from the outdoor heat exchanger to the indoor heat exchanger between the end of the defrosting operation and the resumption of the heating operation. However, when a gaseous refrigerant is discharged from the compressor to the indoor heat exchanger at the resumption of the heating operation, the liquid refrigerant accumulated in the indoor heat exchanger is driven away toward an expansion valve by the gaseous refrigerant.

If such an air conditioner uses R32 of which flow speed rate (i.e., the flow speed of a gaseous refrigerant / the flow speed of a liquid refrigerant) is high as a refrigerant, however, the gaseous refrigerant at a high speed and the liquid refrigerant at a low speed will mix together to easily create a turbulent flow when the liquid refrigerant accumulated in the indoor heat exchanger is driven away by the gaseous refrigerant. If the indoor heat exchanger holds a large amount of the liquid refrigerant, the turbulent flow will develop so much as to inevitably create some noise (i.e., refrigerant noise) in the indoor heat exchanger (e.g., in a flow divider).

It is therefore an object of the present invention to reduce a refrigerant noise from occurring in an indoor heat exchanger when an air conditioner using R32 as a refrigerant resumes a heating operation.

### SOLUTION TO THE PROBLEM

The present invention is directed to an air conditioner (1) according to claim 1 which includes a refrigerant circuit (20) and a switching mechanism (22). In the refrigerant circuit (20), a compressor (21), an outdoor heat exchanger (23), an expansion valve (24), and an indoor heat exchanger (25) are connected together in this order, and the refrigerant circuit (20) circulates a refrigerant to create a refrigeration cycle. The switching mechanism (22) is connected to the refrigerant circuit (20), and switches between a heating operation and a defrosting operation. The heating operation causes the refrigerant to condense in the indoor heat exchanger (25). The defrosting operation causes the refrigerant to circulate in the opposite direction from the heating operation to defrost the outdoor heat exchanger (23). In the refrigerant circuit (20), R32 is filled as a refrigerant. The air conditioner includes a controller (11) which carries out a liquid reduction control from the end of the defrosting operation to the resumption of the heating operation to which the switching mechanism (22) switches. The liquid reduction control causes the expansion valve (24) to be fully closed or to have an opening degree smaller in the liquid reduction control than in the defrosting operation to reduce the flow of the liquid refrigerant from the outdoor exchanger (23) into the indoor heat exchanger (25).

R32 is higher in flow speed rate (i.e., the flow speed of a gaseous refrigerant / the flow speed of a liquid refrigerant) than other refrigerants. Hence, in the air conditioner (1) using R32 as a refrigerant, a gaseous refrigerant at a high speed and a liquid refrigerant at a low speed mix together in the indoor heat exchanger (25) to easily create a turbulent flow when the gaseous refrigerant is discharged from the compressor (21) to the indoor heat exchanger (25) at the resumption of the heating operation. If the indoor heat exchanger (25) holds a large amount of the liquid refrigerant, the turbulent flow will become greater, and could create a refrigerant noise in the indoor heat exchanger (25).

However, from the end of the defrosting operation to the resumption of the heating operation (during the liquid reduction control), the first aspect involves a reduction in the amount of the liquid refrigerant that flows from the outdoor heat exchanger (23) through the expansion valve (24) into the indoor heat exchanger (25). Therefore, the reduction in the liquid refrigerant flow reduces the accumulation of the liquid refrigerant in large amount in the indoor heat exchanger (25) before the resumption of the heating operation (i.e., during the liquid reduction control), and, at the resumption of the heating operation, the development of a large turbulent flow by the liquid and gaseous refrigerants in the indoor heat exchanger (25) and the resulting occurrence of a refrigerant noise.

According to the present invention, the controller (11) carries out the liquid reduction control that involves performing first and second controls. The first control may cause (i) the expansion valve (24) to have the opening degree smaller after the defrosting operation than in the defrosting operation, and (ii) the compressor (21) to have the revolution speed lower after the defrosting operation than in the defrosting operation. The second control may cause (i) the expansion valve (24) to have the opening degree smaller after the first control than in the first control, and (ii) the compressor (21) to stop.

In the air conditioner (1), a larger amount of the liquid refrigerant tends to flow from the outdoor heat exchanger (23) through the expansion valve (24) into the indoor heat exchanger (25) as the difference in pressure becomes greater between the two refrigerant flow channels, when the compressor (21) is brought to a stop while the expansion valve (24) is opened to a smaller degree and the two refrigerant flow channels communicate with each other.

However, in the present invention, the compressor (21) is run in the first control at a low revolution speed with the expansion valve (24) opened to a smaller degree, so that the difference in pressure between the two refrigerant flow channels is brought narrower to some extent, and then, the compressor (21) is brought to a stop in the second control with the expansion valve (24) opened to a smaller degree. Such controls ensure a reduction in the amount of the liquid refrigerant that flows from the outdoor heat exchanger (23) through the expansion valve (24) into the indoor heat exchanger (25).

### ADVANTAGES OF THE INVENTION

According to the present invention, the air conditioner (1), using R32 as a refrigerant, carries out a liquid reduction control, from the end of the defrosting operation to the resumption of the heating operation, to reduce the amount of the liquid refrigerant that flows from the outdoor heat exchanger (23) through the expansion valve (24) into the indoor heat exchanger (25). This liquid reduction control can reduce the accumulation of the liquid refrigerant in large amount in the indoor heat exchanger (25) before the resumption of the heating operation (i.e., during the liquid reduction control), and, at the resumption of the heating operation, can reduce the development of a large turbulent flow by the liquid and gaseous refrigerants and the resulting occurrence of a refrigerant noise, when the liquid refrigerant in the indoor heat exchanger (25) is driven away by the gaseous refrigerant.

According to the present invention, during the liquid reduction control, the compressor (21) is run in the first control at a low revolution speed with the expansion valve (24) opened to a smaller degree, so that the difference in pressure between the two refrigerant flow channels is brought narrower to some extent, and then, the compressor (21) is brought to a stop in the second control with the expansion valve (24) opened to a smaller degree. Such controls can ensure a reduction in the amount of the liquid refrigerant that flows from the outdoor heat exchanger (23) through the expansion valve (24) into the indoor heat exchanger (25), which successfully reduces the occurrence of the refrigerant noise.

### BRIEF DESCRIPTION OF THE DRAWINGS

[FIG. 1] FIG. 1 shows a piping system diagram illustrating a structure of an air conditioner according to a first embodiment.
[FIG. 2] FIG. 2 shows graphs illustrating a revolution speed of a compressor and an opening degree of an expansion valve during liquid reduction control according to the first embodiment.
[FIG. 3] FIG. 3 shows graphs illustrating an amount of a liquid refrigerant in an indoor heat exchanger and a difference in pressure between two refrigerant flow channels (i.e., an outdoor refrigerant flow channel and an indoor refrigerant flow channel) during the liquid reduction control according to the first embodiment.
[FIG. 4] FIG. 4 shows a graph illustrating an opening degree of the expansion valve during a pressure equalizing control according to the first embodiment.
[FIG. 5] FIG. 5 shows graphs illustrating a revolution speed of a compressor and an opening degree of an expansion valve during a liquid reduction control according to a second embodiment.
[FIG. 6] FIG. 6 shows graphs illustrating an amount of a liquid refrigerant in an indoor heat exchanger and a difference in pressure between two refrigerant flow channels (i.e., an outdoor refrigerant flow channel and an indoor refrigerant flow channel) during the liquid reduction control according to the second embodiment.

### DESCRIPTION OF EMBODIMENTS

Embodiments of the present invention will now be described. Note that the embodiments below are essentially preferable examples, and are not intended to limit the scopes, the applications, or the usage of the present invention.

### «First Embodiment of the Present Invention»

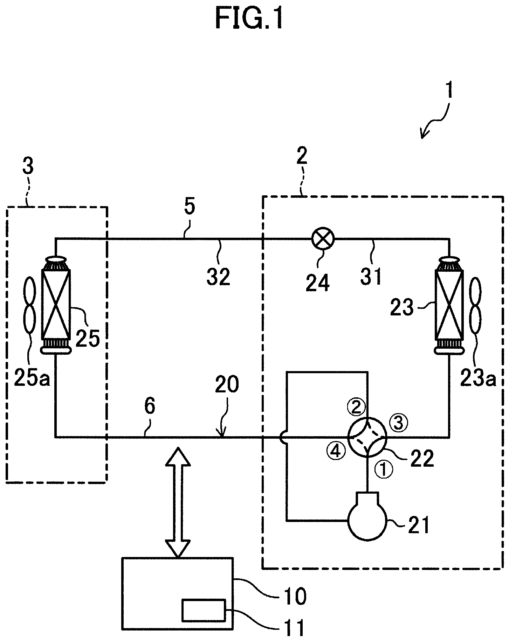

An air conditioner (1) according to a first embodiment of the present invention (i.e., a so-called "room air conditioner") includes an indoor unit mounted on a wall or the ceiling of a room and conditioning the air inside the room. As shown in FIG. 1, the air conditioner (1) includes an outdoor unit (2), an indoor unit (3), and a controller (10). The outdoor unit (2) and the indoor unit (3) are connected with each other via a liquid-side communicating pipe (5) and a gas-side communicating pipe (6). In the air conditioner (1), the outdoor unit (2), the indoor unit (3), the liquid-side communicating pipe (5), and the gas-side communicating pipe (6) form a refrigerant circuit (20).

In the refrigerant circuit (20), connected to are a compressor (21), a four-way switching valve (22), an outdoor heat exchanger (23), an expansion valve (24), and an indoor heat exchanger (25). The compressor (21), the four-way switching valve (22), the outdoor heat exchanger (23), and the expansion valve (24) are housed in the outdoor unit (2). The outdoor unit (2) is provided with an outdoor fan (23a) for supplying outdoor air to the outdoor heat exchanger (23). On the other hand, the indoor heat exchanger (25) is housed in the indoor unit (3). The indoor unit (3) is provided with an indoor fan (25a) for supplying room air to the indoor heat exchanger (25).

The refrigerant circuit (20) is a closed circuit for creating a refrigeration cycle. This refrigerant circuit (20) is filled with R32 (HFC32; namely difluoromethane, as a refrigerant). In the refrigerant circuit (20), the compressor (21) has a discharge side connected to a first port and a suction side connected to a second port of the four-way switching valve (22). Arranged along the refrigerant circuit (20) are the outdoor heat exchanger (23), the expansion valve (24), and the indoor heat exchanger (25) in the order from a third port toward a fourth port of the four-way switching valve (22).

The compressor (21) is a scroll or rotary hermetic compressor. The revolution speed of the compressor (21) is variable. Specifically, the compressor (21) has an electric motor connected to a commercial power source via an inverter. When the output frequency of the inverter alters, the revolution speed of the electric motor changes, causing the change in the revolution speed of the compressor (21).

Acting as a switching mechanism of the present invention, the four-way switching valve (22) switches directions in which the refrigerant circulates in the refrigerant circuit (20) to switch operations (i.e., cooling, hearing, and defrosting operations) of the air conditioner (1). This four-way switching valve (22) switches between a first state and a second state. In the first state, the first port communicates with the third port, and the second port communicates with the fourth port (i.e., the state illustrated in FIG. 1 with solid curves). In the second state, the first port communicates with the fourth port, and the second port communicates with the third port (i.e., the state illustrated in FIG. 1 with dashed curves).

The outdoor heat exchanger (23) and indoor heat exchanger (25) are a so-called cross-fin heat exchanger. The outdoor heat exchanger (23) causes heat to be exchanged between the outdoor air and the refrigerant. The indoor heat exchanger (25) causes heat to be exchanged between the indoor air and the refrigerant.

The expansion valve (24), a so-called electronic expansion valve, is variable in its opening degree by a pulse motor.

The controller (10) controls operations of the units included in the refrigerant circuit (20). The operations include changing the revolution speed of the compressor (21) and the opening degree of the expansion valve (24), and switching the four-way switching valve (22). This controller (10) includes a liquid reduction controller (11). Acting as a controller of the present invention, the liquid reduction controller (11) reduces the inflow of the liquid refrigerant from the outdoor heat exchanger (23) into the indoor heat exchanger (25) between the end of the defrosting operation and the resumption of the heating operation.

### -Operations-

Described next are the operations of the air conditioner (1). The air conditioner (1) carries out the cooling, heating, and defrosting operations. The defrosting operation involves defrosting the outdoor heat exchanger (23).

### <Cooling Operation>

In the cooling operation, the four-way switching valve (22) is set to the first state, and the opening degree of the expansion valve (24) is adjusted so that the superheat degree of a refrigerant, which flows out of the indoor heat exchanger (25), becomes equal to a predetermined target value. Moreover, the outdoor fan (23a) and the indoor fan (25a) are in operation.

When the compressor (21) is run in this situation, a refrigeration cycle is created in the refrigerant circuit (20) as follows: the refrigerant flows and circulates from the compressor (21) through the four-way switching valve (22) to the outdoor heat exchanger (23), the expansion valve (24), and the indoor heat exchanger (25) in this order; the outdoor heat exchanger (23) functions as a condenser; and the indoor heat exchanger (25) functions as an evaporator.

Specifically, the gaseous refrigerant discharged from the compressor (21) flows through the four-way switching valve (22) into the outdoor heat exchanger (23). In the outdoor heat exchanger (23), the gaseous refrigerant dissipates heat into outdoor air, and condenses. After condensing in the outdoor heat exchanger (23), the liquid refrigerant is decompressed by the expansion valve (24), and then flows into the indoor heat exchanger (25). In the indoor heat exchanger (25), the liquid refrigerant absorbs heat from room air and evaporates to cool the room air. The gaseous refrigerant, which has evaporated in the indoor heat exchanger (25), is sucked into the compressor (21) via the four-way switching valve (22). The sucked gaseous refrigerant is compressed by the compressor (21) and then is discharged again. The refrigerant will be circulated in this manner repeatedly.

### <Heating operation>

In the heating operation, the four-way switching valve (22) is set to the second state, and the opening degree of the expansion valve (24) is adjusted so that the superheat degree of the refrigerant, which flows out of the outdoor heat exchanger (23), becomes equal to a predetermined target value. Moreover, the outdoor fan (23a) and the indoor fan (25a) are in operation.

When the compressor (21) is run in this situation, a refrigeration cycle is created in the refrigerant circuit (20) as follows: the refrigerant circulates in the opposite direction from the cooling operation; the indoor heat exchanger (25) functions as a condenser; and the outdoor heat exchanger (23) functions as an evaporator.

Specifically, the gaseous refrigerant discharged from the compressor (21) flows into the indoor heat exchanger (25) via the four-way switching valve (22). In the indoor heat exchanger (25), the gaseous refrigerant dissipates heat into room air and condenses to heat the room air. After condensing in the indoor heat exchanger (25), the liquid refrigerant is decompressed by the expansion valve (24), and then flows into the indoor heat exchanger (23). In the outdoor heat exchanger (23), the liquid refrigerant absorbs heat from outdoor air and evaporates. After evaporating in the outdoor heat exchanger (23), the gaseous refrigerant is sucked into the compressor (21) via the four-way switching valve (22). The sucked gaseous refrigerant is compressed by the compressor (21) and then is discharged again. The refrigerant will be circulated in this manner repeatedly.

### <Defrosting Operation>

Continuing the heating operation forms frost on, for example, a heat transfer tube of the outdoor heat exchanger (23). This frost grows gradually, and becomes large. Thus, the air conditioner (1) switches from the heating operation to the defrosting operation at intervals of the heating operations each followed by a predetermined time period.

In the defrosting operation, the four-way switching valve (22) is set to the first state, and the expansion valve (24) is set to be fully opened. Moreover, the outdoor fan (23a) and the indoor fan (25a) are at a stop.

When the compressor (21) is run under this situation, a refrigeration cycle is created in the refrigerant circuit (20) as follows: the refrigerant circulates in the opposite direction from the heating operation (in the same direction as seen in the cooling operation); the outdoor heat exchanger (23) functions as a condenser; and the indoor heat exchanger (25) functions as a evaporator.

Specifically, the gaseous refrigerant discharged from the compressor (21) flows into the outdoor heat exchanger (23) via the four-way switching valve (22). In the outdoor heat exchanger (23), the formed frost is heated by the gaseous refrigerant of a high temperature and melts, whereas the gaseous refrigerant is cooled by the frost and condenses (i.e., dissipates its heat). After condensing in the outdoor heat exchanger (23), the liquid refrigerant is decompressed by the expansion valve (24), and flows into the indoor heat exchanger (25). In the indoor heat exchanger (25), the liquid refrigerant absorbs heat from the air and evaporates. After evaporating in the indoor heat exchanger (25), the gaseous refrigerant is then sucked into the compressor (21) via the four-way switching valve (22). The gaseous refrigerant sucked into the compressor (21) is compressed, and then discharged again. The refrigerant will be circulated in this manner repeatedly. As can be seen, the defrosting operation will be continuously carried out for a predetermined time period.

### <Liquid Reduction Control after Defrosting Operation>

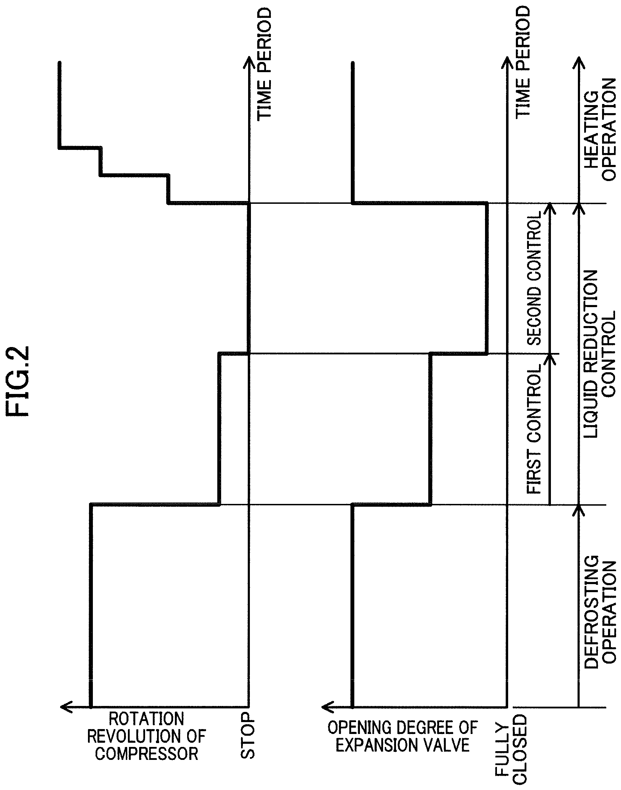

As illustrated in FIG. 2, the air conditioner (1) carries out the liquid reduction control from the end of the defrosting operation to the resumption of the heating operation. The liquid reduction control involves carrying out first and second controls in this order.

The opening degree of the expansion valve (24) is set smaller in the first control than in the defrosting operation (i.e., in this case a medium opening degree), and the compressor (21) is set to run at a revolution speed lower in the first control than in the defrosting operation (i.e., in this case the minimum revolution speed). Moreover, the four-way switching valve (22), the outdoor fan (23a), and the indoor fan (25a) remain in the same states as those in the defrosting operation without change (i.e., the four-way switching valve (22) is in the first state, and the outdoor fan (23a) and the indoor fan (25a) are at a stop).

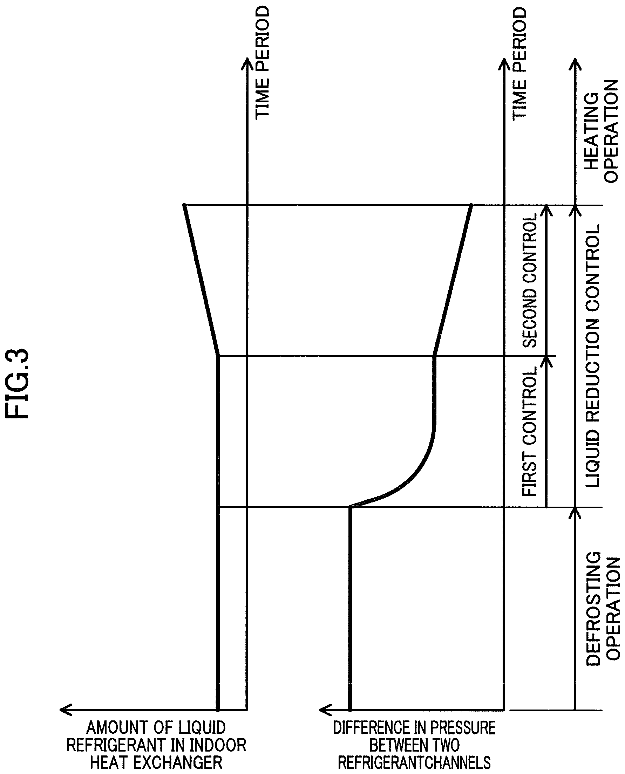

As seen in the defrosting operation, a refrigeration cycle is created during the first control in the refrigerant circuit (20) as follows: the refrigerant circulates; the outdoor heat exchanger (23) functions as a condenser; and the indoor heat exchanger (25) functions as an evaporator. Due to the refrigeration cycle, the amount of the liquid refrigerant in the indoor heat exchanger (25) does not increase and remains small, as illustrated in FIG. 3.

However, the revolution speed of the compressor (21) becomes lower and the amount of the circulating refrigerant is smaller in the first control than in the defrosting operation. Hence, the difference in pressure narrows down between the two refrigerant flow channels (31, 32) connected to the expansion valve (24), one of the flow channels being close to the outdoor heat exchanger (23) and the other being close to the indoor heat exchanger (25) (i.e., an outdoor-side refrigerant flow channel (31) and an indoor-side refrigerant flow channel (32) in FIG. 1). This first control is continuously carried out for a predetermined time period (e.g., 30 seconds).

When the first control is continuously carried out for the predetermined time period, the second control starts. The opening degree of the expansion valve (24) is set smaller in the second control than in the first control (i.e., the minimum opening degree), and the compressor (21) is brought to a stop. Furthermore, the four-way switching valve (22), the outdoor fan (23a), and the indoor fan (25a) remain in the same states as those in the defrosting operation without change.

In the refrigerant circuit (20), no refrigeration cycle is created during the second control because the compressor (21) is at a stop. Depending on the difference in pressure between the two refrigerant flow channels (31, 32) (i.e., the outdoor-side refrigerant flow channel (31) and the indoor-side refrigerant flow channel (32)), the liquid refrigerant in the outdoor heat exchanger (23) flows through the expansion valve (24) to the indoor heat exchanger (25). However, the difference in pressure between the two refrigerant flow channels (31, 32) is narrow, and, moreover, the opening degree of the expansion valve (24) is small. As a result, the flow of the liquid refrigerant from the outdoor heat exchanger (23) to the indoor heat exchanger (25) is reduced to a very small amount. This second control is continuously carried out for a predetermined time period (e.g., 30 seconds).

### <Resumption of Heating Operation>

When the second control (the liquid reduction control) is continuously carried out for the predetermined time period, the four-way switching valve (22) switches from the first state to the second state, and the heating operation resumes.

When the heating operation resumes, the compressor (21) turns on and gradually increases its revolution speed, and the expansion valve (24) increases its opening degree to a predetermined opening degree. Then, in the refrigerant circuit (20), a gaseous refrigerant discharged from the compressor (21) flows through the four-way switching valve (22) into the indoor heat exchanger (25). In the indoor heat exchanger (25), the gaseous refrigerant drives the liquid refrigerant in the indoor heat exchanger (25) toward the expansion valve (24).

When the refrigerant is R32 at this point, the flow speed rate (i.e., the flow speed of a gaseous refrigerant / the flow speed of a liquid refrigerant) of the refrigerant is high. As a result, the gaseous refrigerant at a high speed and the liquid refrigerant at a low speed mix together to easily create a turbulent flow. If the indoor heat exchanger (25) holds a large amount of the liquid refrigerant, the turbulent flow will develop so much as to make some refrigerant noise in the indoor heat exchanger (25) (e.g., in a flow divider).

However, during the liquid reduction control from the end of the defrosting operation to the resumption of the heating operation in this embodiment, the opening degree of the expansion valve (24) is set smaller in the liquid reduction control than in the defrosting operation (i.e., the opening degree is set to a medium in the first control and to the minimum in the second control). Such setting reduces the inflow of the liquid refrigerant from the outdoor heat exchanger (23) into the indoor heat exchanger (25). The reduction in the liquid refrigerant flow reduces the accumulation of the liquid refrigerant in large amount in the indoor heat exchanger (25) before the resumption of the heating operation (during the liquid reduction control), and thus avoids, at the resumption of the heating operation, the development of a large turbulent flow by the liquid and gaseous refrigerants in the indoor heat exchanger (25) and the resulting occurrence of refrigerant noise.

### <Pressure Equalizing Control after End of Heating Operation>

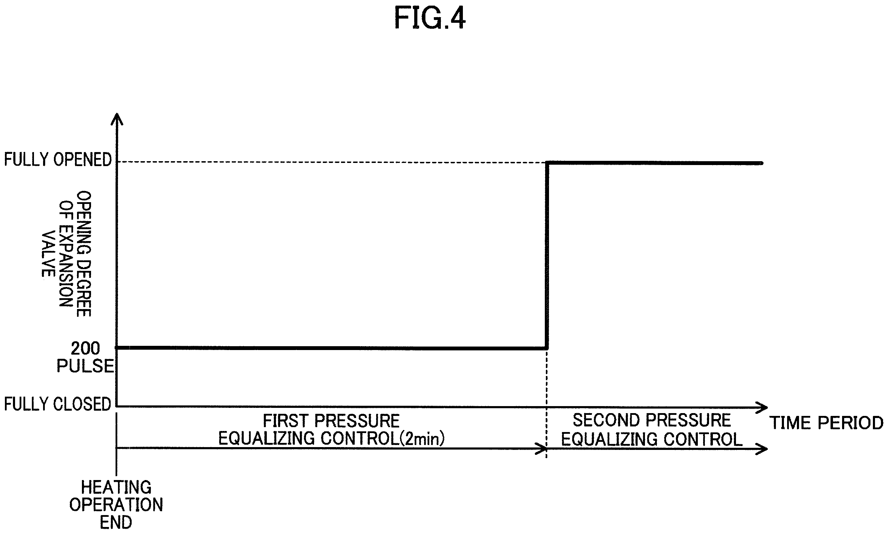

The air conditioner (1) also carries out a pressure equalizing control to maintain the inside of the refrigerant circuit (20) at a constant pressure, after the compressor (21) is brought to a stop to end the heating operation. As illustrated in FIG. 4, the pressure equalizing control involves alternately carrying out a first pressure equalizing control and a second pressure equalizing control.

In the first pressure equalizing control, the expansion valve (24) is set to a relatively small opening degree (e.g., 200 pulses) during a predetermined time period (e.g., two minutes). During the first pressure equalizing control, the refrigerant tends to flow from the indoor heat exchanger (25) at a high pressure through the expansion valve (24) to the outdoor heat exchanger (23) at a low pressure. In the first pressure equalizing control, however, the small opening degree of the expansion valve (24) can curb a sudden flow of the refrigerant, and consequently, reduce occurrence of the refrigerant noise due to the sudden flow of the refrigerant. After that, in the second pressure equalizing control, the expansion valve (24) is set fully opened, and the inside of the refrigerant circuit (20) remains under a constant pressure.

### -Effects of Embodiment-

Using R32 as a refrigerant, the air conditioner (1) according to this embodiment carries out the liquid reduction control, between the end of the defrosting operation and the resumption of the heating operation, to reduce the amount of the liquid refrigerant that flows from the outdoor heat exchanger (23) through the expansion valve (24) into the indoor heat exchanger (25). This liquid reduction control can reduce the accumulation of the liquid refrigerant in large amount in the indoor heat exchanger (25) before the resumption of the heating operation (i.e., during the liquid reduction control), and, at the resumption of the heating operation, can reduce the development of a large turbulent flow by the liquid and gaseous refrigerants in the indoor heat exchanger (25) and the resulting occurrence of refrigerant noise, when the liquid refrigerant in the indoor heat exchanger (25) is driven away by the gaseous refrigerant.

Moreover, in the air conditioner (1), the four-way switching valve (22) makes a loud switching noise in switching, at the resumption of the heating operation, under the condition when the difference in pressure is great between the two refrigerant flow channels (31, 32) (i.e., one to the outdoor refrigerant flow channel (31) and the other to the indoor refrigerant flow channel (32)) connected to the four-way switching valve (22).

In this embodiment, however, the compressor (21) is brought to a stop or the revolution speed of the compressor (21) is set lower in the liquid reduction control than in the defrosting operation, while the expansion valve (24) is opened to a smaller degree and the two refrigerant flow channels communicate with each other before the resumption of the heating operation (during the liquid reduction control). This can narrow down the difference in pressure between the two refrigerant flow channels (31, 32). Consequently, even if the four-way switching valve (22) switches at the resumption of the heating operation, the switching noise is successfully reduced.

Furthermore, in the air conditioner (1), a larger amount of the liquid refrigerant tends to flow from the outdoor heat exchanger (23) through the expansion valve (24) into the indoor heat exchanger (25) as the difference in pressure becomes greater between the two refrigerant flow channels, when the compressor (21) is brought to a stop while the expansion valve (24) is opened to a smaller degree and the two refrigerant flow channels communicate with each other.

However, during the liquid reduction control in this embodiment, the compressor (21) is run in the first control at a low revolution speed with the expansion valve (24) opened to a smaller degree, so that the difference in pressure between the two refrigerant flow channels is brought narrower to some extent, and then, the compressor (21) is brought to a stop in the second control with the expansion valve (24) opened to a smaller degree. Such controls can ensure a reduction in the amount of the liquid refrigerant that flows from the outdoor heat exchanger (23) through the expansion valve (24) into the indoor heat exchanger (25), which, as a result, successfully reduces the occurrence of the refrigerant noise just as intended.

### <Modifications of First Embodiment>

In the first control according to the first embodiment, the revolution speed of the compressor (21) is set the lowest, and the opening degree of the expansion valve (24) is set to an approximately medium. However, the revolution speed of the compressor (21) in the first control shall not be limited to the lowest as long as the revolution speed is lower in the first control than in the defrosting operation. In addition, the opening degree of the expansion valve (24) in the first control shall not be limited to the approximately medium as long as the opening degree is smaller in the first control than in the defrosting operation.

In the first embodiment, the opening degree of the expansion valve (24) is set to the minimum in the second control. However, the opening degree of the expansion valve (24) in the second control shall not be limited to the minimum as long as the opening degree is smaller in the second control than in the first control.

### «Second Embodiment of the Present Invention»

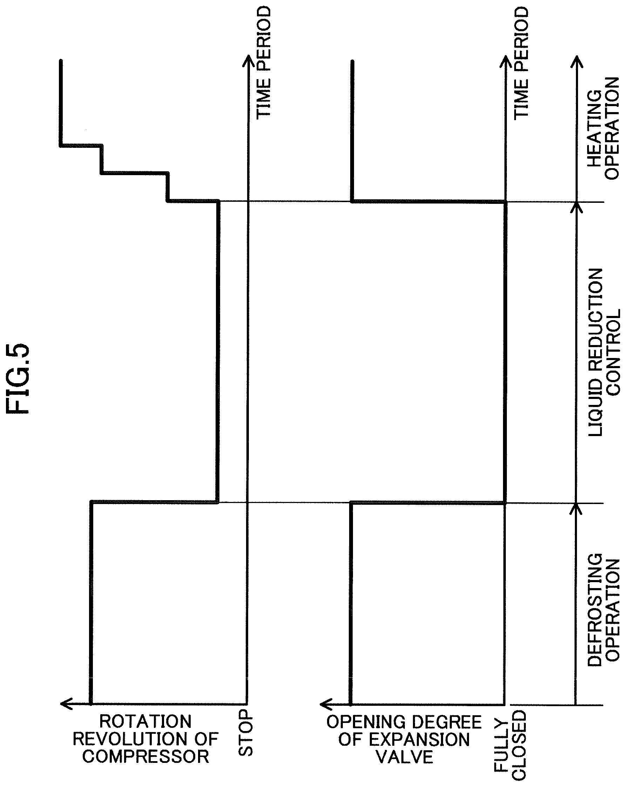

In the air conditioner (1) according to the second embodiment of the present invention, modified are details of the control during the liquid reduction control according to the first embodiment. That is, in the first embodiment, the opening degree of the expansion valve (24) is set smaller during the liquid reduction control than during the defrosting operation (i.e., the opening degree is set to an approximately medium during the first control, and to the minimum during the second control); whereas, in the second embodiment, the expansion valve (24) is set fully closed during the liquid reduction control as shown in FIG. 5.

Specifically, during the liquid reduction control in the second embodiment, the expansion valve (24) is set to a fully-closed state and the compressor (21) is set to the lowest revolution speed. Furthermore, the four-way switching valve (22), the outdoor fan (23a), and the indoor fan (25a) remain in the same states as those in the defrosting operation without change.

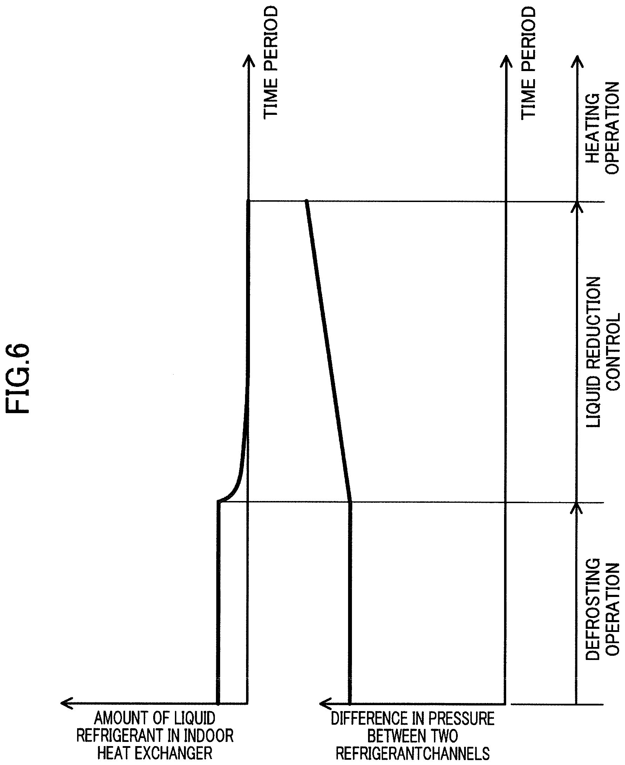

The expansion valve (24) in the refrigerant circuit (20) is fully closed during the liquid reduction control, so that the compressor (21) conveys the refrigerant near the indoor heat exchanger (25) toward the outdoor heat exchanger (23)-that is, a so-called pump down operation. The pump down operation can reduce the amount of the liquid refrigerant in the indoor heat exchanger (25) as illustrated in FIG. 6. At the resumption of the heating operation, the reduction in the liquid refrigerant can inhibit the formation of a turbulent flow by the liquid and gaseous refrigerants in the indoor heat exchanger (25) and can reduce the occurrence of the refrigerant noise even more successfully.

### <Modifications of Second Embodiment >

In the second embodiment, the revolution speed of the compressor (21) is set the lowest in the liquid reduction control; however, the revolution speed of the compressor (21) shall not be limited to the lowest.

### «Other Embodiments »

In the first embodiment, the first and second controls are carried out during the liquid reduction control. The first control involves driving the compressor (21) while setting the opening degree of the expansion valve (24) smaller in the liquid reduction control than in the defrosting operation. The second control involves bringing the compressor (21) to a stop while setting the opening degree of the expansion valve (24) smaller in the liquid reduction control than in the defrosting operation (the second control). Moreover, during the liquid reduction control in the second embodiment, the compressor (21) is run while the expansion valve (24) is fully closed. However, the liquid reduction control shall not be limited to the above-described ones as long as the expansion valve (24) is controlled either to be fully-closed or to have an opening degree smaller in the liquid reduction control than in the defrosting operation. For example, the compressor (21) may be brought to a stop while the expansion valve (24) is fully closed. The liquid reduction control may involve carrying out only the first control (i.e., running the compressor (21), while setting the opening degree of the expansion valve (24) smaller in the liquid reduction control than in the defrosting operation), or the second control (i.e., bringing the compressor (21) to a stop, while setting the opening degree of the expansion valve (24) smaller in the liquid reduction control than in the defrosting operation).

### INDUSTRIAL APPLICABILITY

As can be seen, the present invention is useful for an air conditioner carrying out a heating operation for heating a room and a defrosting operation for defrosting an outdoor heat exchanger.

### DESCRIPTION OF REFERENCE CHARACTERS

- 1: Air Conditioner
- 11: Liquid Reduction Controller (Controller)
- 20: Refrigerant Circuit
- 21: Compressor
- 22: Four-Way Switching Valve (Switching Mechanism)
- 23: Outdoor Heat Exchanger
- 24: Expansion Valve
- 25: Indoor Heat Exchanger

## Claims

1. An air conditioner which includes:
a refrigerant circuit (20) in which a compressor (21), an outdoor heat exchanger (23), an expansion valve (24), and an indoor heat exchanger (25) are connected together in this order, the refrigerant circuit (20) circulating a refrigerant to create a refrigeration cycle; and
a switching mechanism (22) connected to the refrigerant circuit (20), and switching between a heating operation and a defrosting operation, the heating operation causing the refrigerant to condense in the indoor heat exchanger (25), and the defrosting operation causing the refrigerant to circulate in the opposite direction from the heating operation to defrost the outdoor heat exchanger (23),
the air conditioner comprising
a controller (11) configured to carry out a liquid reduction control from the end of the defrosting operation to resumption of the heating operation to which the switching mechanism (22) switches, the liquid reduction control causing the expansion valve (24) to be fully closed or to have an opening degree smaller in the liquid reduction control than in the defrosting operation to reduce an inflow of the liquid refrigerant from the outdoor heat exchanger (23) into the indoor heat exchanger (25), and **characterized in that** the refrigerant circuit (20) is filled with R32 as a refrigerant, and **in that** the controller (11) is configured to carry out the liquid reduction control by performing first and second controls, the first control causing (i) the expansion valve (24) to have the opening degree smaller after the defrosting operation than in the defrosting operation, and (ii) the compressor (21) to have the revolution speed lower after the defrosting operation than in the defrosting operation, and the second control causing (i) the expansion valve (24) to have the opening degree smaller after the first control than in the first control, and (ii) the compressor (21) to stop.

## Patentansprüche

1. Eine Klimaanlage, umfassend:
einen Kältemittelkreislauf (20), in dem ein Kompressor (21), ein Außenwärmetauscher (23), ein Expansionsventil (24) und ein Innenraum-Wärmetauscher (25) in dieser Reihenfolge miteinander verbunden sind, wobei der Kältemittelkreislauf (20) ein Kältemittel zirkulieren lässt, um einen Kühlzyklus zu erzeugen; und
einen Schaltungsmechanismus (22), der mit dem Kältemittelkreislauf (20) verbunden ist und zwischen einem Heiz- und einem Kühlbetrieb umschaltet, wobei der Heizbetrieb das Kältemittel dazu veranlasst, im Innenraum-Wärmetauscher (25) zu kondensieren und der Abtaubetrieb das Kältemittel dazu veranlasst, in der Gegenrichtung, verglichen mit dem Heizbetrieb, zu zirkulieren, um den Außenwärmetauscher (23) abzutauen,
wobei die Klimaanlage umfasst:
einen Regler (11), der zur Ausführung einer Flüssigkeitsreduktionsregelung ab dem Ende des Abtaubetriebs bis zur Wiederaufnahme des Heizbetriebs konfiguriert ist, zu dem der Schaltungsmechanismus (22) umschaltet, wobei die Flüssigkeitsreduktionsregelung das Expansionsventil (24) dazu veranlasst, vollständig geschlossen zu sein oder einen Öffnungsgrad zu haben, der in der Flüssigkeitsreduktionsregelung kleiner ist als im Abtaubetrieb, um den Zufluss des Flüssigkühlmittels vom Außenwärmetauscher (23) in den Innenraum-Wärmetauscher (25) zu reduzieren, und
**dadurch gekennzeichnet, dass** der Kältemittelkreislauf (20) mit R32 als Kältemittel gefüllt ist und dass der Regler (11) zur Ausführung der Flüssigkeitsreduktionsregelung konfiguriert ist, durch Ausführung der ersten und zweiten Regelungen, wobei die erste Regelung (i) das Expansionsventil (24) dazu veranlasst, den Öffnungsgrad nach dem Abtaubetrieb kleiner zu haben als während des Abtaubetriebs und (ii) den Kompressor (21) dazu veranlasst, die Drehzahl nach dem Abtaubetrieb niedriger zu haben als während des Abtaubetriebs, und wobei die zweite Regelung (i) das Expansionsventil (24) dazu veranlasst, nach der ersten Regelung den Öffnungsgrad kleiner zu haben als während der ersten Regelung und (ii) den Kompressor (21) dazu veranlasst, zu stoppen.

## Revendications

1. Climatiseur qui comprend :
un circuit de réfrigérant (20) dans lequel un compresseur (21), un échangeur de chaleur extérieur (23), une soupape de détente (24), et un échangeur de chaleur intérieur (25) sont connectés ensemble dans cet ordre, le circuit de réfrigérant (20) faisant circuler un réfrigérant pour créer un cycle de réfrigération ; et
un mécanisme de commutation (22) connecté au circuit de réfrigérant (20), et commutant entre une opération de chauffage et une opération de dégivrage, l'opération de chauffage amenant le réfrigérant à se condenser dans l'échangeur de chaleur intérieur (25), et l'opération de dégivrage amenant le réfrigérant à circuler dans la direction opposée à l'opération de chauffage pour dégivrer l'échangeur de chaleur extérieur (23),
le climatiseur comprenant
un dispositif de commande (11) configuré pour réaliser une commande de réduction de liquide à partir de la fin de l'opération de dégivrage jusqu'à la reprise de l'opération de chauffage à laquelle le mécanisme de commutation (22) commute, la commande de réduction de liquide amenant la soupape de détente (24) à se fermer totalement ou à avoir un degré d'ouverture plus faible lors de la commande de réduction de liquide que lors de l'opération de dégivrage pour réduire un débit entrant du réfrigérant liquide depuis l'échangeur de chaleur extérieur (23) jusque dans l'échangeur de chaleur intérieur (25), et
**caractérisé en ce que** le circuit de réfrigérant (20) est rempli de R32 en tant que réfrigérant, et **en ce que**
le dispositif de commande (11) est configuré pour réaliser la commande de réduction de liquide en exécutant des première et deuxième commandes, la première commande amenant (i) la soupape de détente (24) à avoir le degré d'ouverture plus faible après l'opération de dégivrage que lors de l'opération de dégivrage, et (ii) le compresseur (21) à avoir la vitesse de rotation plus faible après l'opération de dégivrage que lors de l'opération de dégivrage, et la deuxième commande amenant (i) la soupape de détente (24) à avoir le degré d'ouverture plus faible après la première commande que lors de la première commande, et (ii) le compresseur (21) à s'arrêter.
